# EUROPÄISCHE PATENTANMELDUNG

(11) **EP 1 621 854 A2**
(43) Veröffentlichungstag der Anmeldung: **01.02.2006**
(21) Anmeldenummer: 05015639.7
(22) Anmeldetag: 19.07.2005
(51) Int. Cl.: G01D 11/24

(54) **Encoderbaugruppe und Verfahren zu ihrer Montage**

(30) Priorität: 29.07.2004 DE 102004036903
(71) Anmelder: PWB-Ruhlatec Industrieprodukte GmbH, 99846 Seebach (DE)
(72) Erfinder: Tenca, Vittorio, 37013 Caprino Veronese (IT); Carradori, Corrado, 37026 Pescantina (VR) (IT)
(74) Vertreter: Müller-Wolff, Thomas

(57) **Zusammenfassung**

Eine Encoderbaugruppe umfasst eine Grundplatte (1), eine Taktscheibe, mindestens einen Sensor, eine Leiterplatte und ein Encodergehäuse, das aus einer Gehausegrundplatte (12) und einem parallel zur Gehäusegrundplatte angeordnetem Gehäusedeckel (10) mit Führungsnuten (11) für die Aufnahme der Leiterplatte (6) besteht, die ebenfalls parallel zur Gehäusegrundplatte (12) verläuft, die über eine formschlüssige Verbindung an der flanschseitigen Grundplatte (1) konzentrisch zur Motorwelle oder der beliebig angetriebenen Wellenart lösbar befestigt ist, wobei in der Gehäusegrundplatte (12) eine Aussparung zur Aufnahme der Motorwelle oder der beliebig angetriebenen Wellenart rechtwinklig zur Gehäusegrundplatte (12) eingeformt ist und über dieser Aussparung die Taktscheibe (4) mittels einer Taktscheiben-Nabe (3) zwischen den Innenseiten des Encodergehäuses und der Unterseite der Leiterplatte auf der Motorwelle oder der beliebig angetriebenen Wellenart positionierbar ist. Die Leiterplatte (6) ist mit einer darauf befestigten Sensoreinheit (5) und der beweglichen Seitenwand (8) in die Führungsnuten (11) des Gehäusedeckels (10) einschiebbar, der umfangseitig Führungselemente (13) zur Positionierung und Fixierung an den Seitenwänden des Gehäuses (2) aufweist. Indem eine Nabe (3) mit einer Taktscheibe (4) über die Aussparung in der Gehäusegrundplatte (12) plaziert wird und in die Führungsnuten (11) des Gehäusedeckels (13) eine Leiterplatte (6) mit einer darauf befestigten Sensoreinheit (5) und der beweglichen Seitenwand (8) des Encodergehäuses soweit eingeschoben wird dass sich auf der Leiterplatte im Bereich der Aussparung oberhalb der Motorwelle oder der beliebig angetriebenen Wellenart ein Widerlager bildet, wird das vormontierte Encodergehäuse auf die Grundplatte aufgesetzt und formschlüssig mit ihr verbunden. Gleichzeitig wird eine Pressbewegung auf die Taktscheibe und die Nabe ausgeübt, und die Leiterplatte mit der beweglichen Seitenwand vollständig in den Gehäusedeckel eingeschoben, so dass die Sensoreinhelt (5) die Code-Markierungen der Taktscheibe erfasst und das Widerlager aus dem Kontaktbereich mit der Taktscheibe-Nabe entfernt wird und der Encoder in einen betriebsbereiten Zustand versetzt wird.

## Beschreibung

Die Erfindung betrifft eine Encoderbaugruppe, bestehend aus einer Grundplatte (1) zur Befestigung des Encoders auf der Flanschseite eines Elektromotors, einer mit Code-Markierungen versehenen Taktscheibe, die radial und axial auf einer aus dem Elektromotor flanschseitig herausragenden Motorwelle oder der beliebig angetriebenen Wellenart mittels Presssitz fixiert ist, mindestens einem Sensor, der im Bereich der Code-Markierungen der Taktscheibe in allen drei Koordinatenrichtungen positioniert und fixiert ist, einer Leiterplatte mit Anschlüssen für eingehende und ausgehende Leitungen sowie gegebenenfalls zum Befestigen von Anschlussbuchsen, die die Leitungen mit einer Signalauswertung und Energieversorgungseinheit verbinden sowie einem Encodergehäuse, das an dem Elektromotor befestigt ist. Die Erfindung betrifft ferner ein Verfahren zur Montage der Encoderbaugruppe sowie der Positionierung/Fixierung auf der Flanschseite eines Elektromotors oder der beliebig angetriebenen Wellenart.

Eine Encoderbaugruppe der eingangs genannten Art ist aus der EP 1 055 915 (PWB-Ruhlatec GmbH) bekannt. Der Encoder besteht dort aus einem zusammensteckbaren Gehäuse zum stirnseitigen Anflanschen an einen Motor, der zumindest an einer Flanschebene eine in das Gehäuse hineinragende Motorwelle aufweist. Das Gehäuse besteht aus einer Grundplatte mit Gehäuseinnenteil und einem Gehäuseoberteil, die für den Zusammenbau ineinander steckbar sind, wobei auf dem Gehäuseinnenteil Bajonettsegmente angeordnet sind, die in entsprechende Aussparungen des Gehäuseoberteils eingreifen. Bei der Drehbewegung zum formschlüssigen Verbinden der Bajonettsegmente gleiten keilförmige Führungsflächen aufeinander, so dass eine Trennung des Gehäuseoberteils von der Grundplatte formgenommen wird und dadurch die Taktscheibe auf der Motorwelle "freigeschaltet" wird.

Aus dem deutschen Gebrauchsmuster DE 291 20 932 U1 (PWB-Ruhlatec Industrieprodukte GmbH) ist ein Motor-Sensor-System bekannt, bei dem auf einer Leiterplatte mindestens zwei Kontaktstifte für die Energieversorgung des mittels einer Befestigungsklammer auf der Leiterplatte fixierten Elektromotors ausgebildet sind. Bei der Fixierung wird die auf der Motorwelle befestigte Taktscheibe in den Schlitz einer Sensor-Emitter-Einheit positioniert. Durch einen halbrunden Ausschnitt an der Befestigungsklammer wird das Wellenende der Sensor-Emitter-Einheit selbstzentrierend positioniert in bezug auf die auf dem Weinende des Elektromotors befestigten Taktscheibe. Diese Befestigung ist jedoch nach allen Seiten hin offen, so dass das bekannte Motor-Sensor-System den Umgebungseinflüssen ausgesetzt ist.

Bei Encodersystemen bestehen hohe Anforderungen hinsichtlich der Zuverlässigkeit bei schwankenden Temperaturverhältnissen, der Genauigkeit der Positionierung und der Auflösungsqualität. Da es sich um Großserienteile handelt, werden fertigungsgerechte Konstruktionen verlangt, die mit möglichst einfachen, störungsunanfälligen und möglichst wenigen Bauteilen auskommen.

Seit längerem wird die hohe Oberflächengüte der Motorwelle dazu benutzt, die Taktscheiben über eine Taktscheibennabe mittels Presssitz zu befestigen. Da hier sehr enge Toleranzen einzuhalten sind, treten entsprechende Presskräfte auf. Nach der Montage muss eine sogenannte "Freischaltung" der Taktscheibe erfolgen, was bei der EP 1 055 915 durch Verdrehen von keilförmigen Bajonettflächen erreicht wird. Das bekannte System ist jedoch für größere Taktscheibendurchmesser und Leiterplatten nicht geeignet.

Aufgabe der vorliegenden Erfindung ist es daher, eine Encoderbaugruppe und ein Verfahren zur Montage anzugeben, das schnell und leicht sowie mit einem Minimum an Werkzeugen ausgeführt werden kann. Die vormontierte Baugruppe soll gegen Verschmutzung und mechanische Beschädigung der Taktscheibe geschützt sein. Eine weitere Anforderung ist es, dass der Encoder als Komponente getestet werden kann. Nach der Vormontage auf dem Elektromotor oder der beliebig angetriebenen Wellenart sollen keine Einzelteile der Baugruppe entfernt oder neu hinzugefügt werden müssen.

Die Aufgabe wird erfindungsgemäß durch die in den Patentansprüchen 1 und 4 angegebenen Merkmale gelöst. Es hat sich gezeigt, dass in dem vormontierten, geschlossenen Gehäuse die Geberscheibe bereits positioniert werden kann und sich während der Endmontage selbsttätig auf der Motorwelle oder der beliebig angetriebenen Wellenart justiert.

Es können beliebige Sensoren auf verschiedenen Leiterplatten angeordnet werden, wobei ihre Position zur Taktscheibe während der Vormontage mit einfachen Mitteln erfolgt.

Der Höhenabstand der Taktscheibe zur Flanschebene des Motors und in bezug auf den Sensor wird durch die geometrische Formgebung der Taktscheibennabe eingestellt. Unterschiedliche Nabenhöhen regeln den Höhenabstand der Taktscheibe.

Durch die Anordnung von Anschlussbuchsen auf der Leiterplatte können verschiedene Standardstecker verwendet werden. Damit lassen sich alle Arten von Sensoren und Code-Markierungen funktionell integrieren.

Bei der Erzeugung des Presssitzes hat die Leiterplatte eine besondere Funktion, indem sie ein Widerlager zusammen mit der entsprechend ausgebildeten Führung im Gehäusedeckel bzw. im Encodergehäuse bildet. Mittels einer beweglichen Seitenwand des Encodergehäuses wird der Sensor auf der Leiterplatte von der Seite her in den Bereich der Code-Markierungen der Taktscheibe gebrecht. Dadurch ist eine erhöhte Variabilität bei unterschiedlichen Taktscheibendurchmessem gegeben. Einzelne Komponenten können während der Vormontage auf der Leiterplatte eingefügt oder ausgetauscht werden. Nach Abschluss der Vormontage ist die Baugruppe komplett in dem Gehäuse untergebracht.

In gleicher Weise wie bei der Montage kann auch eine Demontage der Encoderbaugruppe erfolgen. Beispielsweise kann die Leiterplatte mit anderen Komponenten bestückt und ausgetauscht werden. Es sind auch verschiedene Typen von Encoderbaugruppen mit Anschlussbuchse, direkt angeschlossener Kabelverbindung oder einer speziell ausgebildeten Sensor-Anschluss-Einheit verwendbar. Diese lassen sich auch schon vor der Montage testen und sind daher im eingebauten Zustand störungsunanfälliger.

Die Idee des erfindungsgemäßen Montageverfahrens besteht darin, zunächst ein nach oben offenes Gehäuse auf der Flanschseite des Motors oder der beliebig angetriebenen Wellenart anzuordnen, in das die Taktscheibe mittels Taktscheibennabe eingebracht wird. Zur Positionierung dient eine Vertiefung in der Grundplatte und ein Kragen an der Taktscheibennabe, der den Höhenabstand der Taktscheibe zur Grundplatte regelt.

Nach diesem ersten Montageschritt kann der an einer Leiterplatte befestigte Sensor mittels einer beweglichen Seitenwand in das Gehäuse eingeschoben werden. Die Vormontage ist beendet, wenn das Gehäuse mit loser eingelegter Taktscheibe und Taktscheibennabe und aufgesetztem Gehäusedeckel auf der Grundplatte des Motors oder der beliebig angetriebenen Wellenart befestigt wird und dann seitlich in einer Führung des Gehäusedeckels die mit einem Sensor bestückte Leiterplatte soweit eingeschoben wird, dass sich Ober der Taktscheibe ein Widerlager bildet.

Zur Bildung des Widerlagers wird an der Spitze der Leiterplatte ein Amboss aufgesetzt. Sobald die Spitze der Leiterplatte mit dem Amboss über der Taktscheibe positioniert ist, kann ein axialer Druck auf die Taktscheibennabe zur Erzeugung einer Pressverbindung mit der Motorwelle oder der beliebig angetriebenen Wellenart aufgebracht werden.

Die Montage der Encoderbaugruppe ist beendet, wenn die Leiterplatte zusammen mit der bewegten Seitenwand des Gehäuses soweit vorgeschoben wird, dass der Amboss aus dem Eingriff mit der Taktscheibennabe heraustritt und damit die Widerlagerfunktion aufgehoben wird. Dies ist die "Freischaltung" der Taktscheibe, die sich nun berührungsfrei im Gehäuse und der Schlitzöffnung des Sensors bewegen kann. Zweckmäßigerweise wird dann auch die bewegliche Seitenwand in entsprechende Befestigungsmittel des Gehäuses verankert, so dass die Encoderbaugruppe allseitig geschlossen ist.

Im folgenden wird die Erfindung anhand mehrerer Ausführungsbeispiele näher erläutert.
Es zeigen:
- Figur 1: perspektivische Ansicht einer erfindungsgemäßen Encoderbaugruppe in Explosivdarstellung vor dem Zusammenbau.
- Figur 2: Darstellung einer vormontierten Encoderbaugruppe im Teilschnitt (Seitenansicht)
- Figur 3: Darstellung einer erfindungsgemäßen Encoderbaugruppe nach der Freischaltung der Taktscheibe

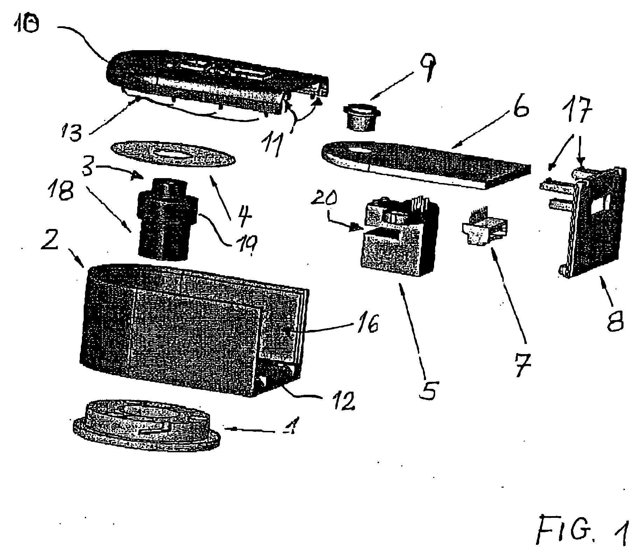

Bei dem in Fig. 1 dargestellten Encoder handelt es sich um ein modulares System bestehend aus der Grundplatte 1, einem Gehäuse 2, einer Taktscheibennabe 3, einer Taktscheibe 4, einer Sensoreinheit 5, einer Leiterplatte 6, einer Anschlussbuchse 7, einer beweglichen Seitenwand 8, einem Amboss 9, einem Gehäusedeckel 10, Führungsnuten 11, einer Gehäusegrundplatte 12 und Führungselementen 13.

Aufgrund seines modularen Aufbaus ist der Encoder sowohl mit reflektiven als auch mit transmissiven Taktscheiben einzusetzen. Damit ist seine Variabilität bei verschiedenen Sensortechnologien deutlich gegenüber dem Stand der Technik vergrößert.

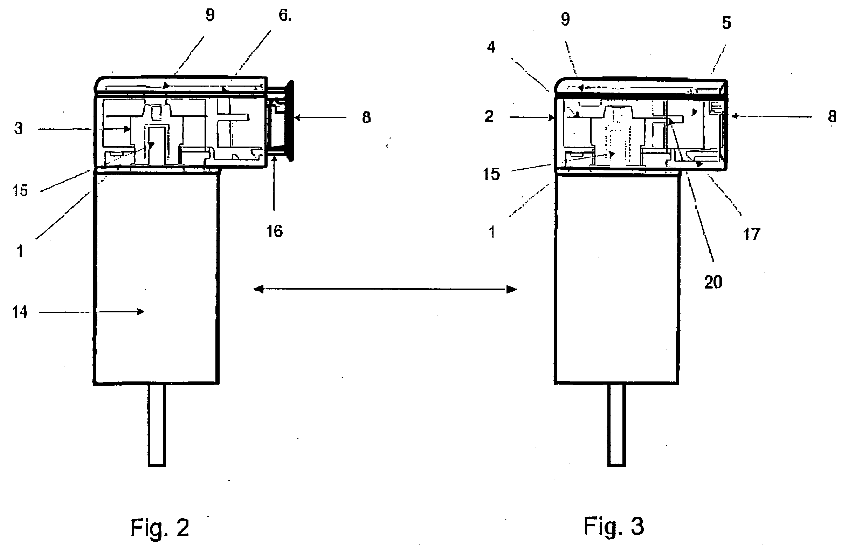

Gemäß Fig. 2 wird der erfindungsgemäße Encoder im vormontierten Zustand mit einem Motor 14 verbunden. Die Nabe 3 ist über einen Presssitz auf der Motorwelle 15 fixiert. Über der Motorwelle 15 befindet sich ein Widerlager, hier in Form eines Ambosses 9, der auf der Leiterplatte 6 befestigt ist.

An der beweglichen Seitenwand 8 erkennt man, dass der Encoder sich im vormontierten Zustand befindet. Erst wenn gemäß Fig. 3 die bewegliche Seitenwand 8 vollständig in das Encodergehäuso 2 eingeschoben ist, wird die seitliche Öffnung 16 des Gehäuses von der beweglichen Seitenwand 8 abgedeckt, so dass das Gehäuse 2 vollständig geschlossen ist. Eine hakenförmige Verklammerung 17 sichert das Gehäuse im geschlossenen Zustand.

Gleichzeitig erkennt man aus der Schnittdarstellung gemäß Fig. 3, dass der Amboss 9 von der Motorwelle 15 entfernt ist und damit die Taktscheibe 4 freigeschaltet ist. Die Taktscheibe 4 befindet sich jetzt mit ihrer Code-Markierung im Sensorbereich der Sensoreinheit 5. Es ist ausreichend Platz für verschiedene Sensortypen vorhanden, so dass auch transmissive Taktscheiben verwendet werden können.

Eine günstige Variante zur Befestigung der Encoderbaugruppe auf dem Elektromotor besteht darin, auf der flanschseitig montierten Grundplatte Bajonett-förmige Verschlüsse anzuordnen. Dann kann durch einfache Drehbewegung des Encodergehäuses eine formschlüssige Verbindung zwischen Encoder und Motor hergestellt werden.

In Fig. 1 sind die Bajonett-förmigen Vertiefungen angedeutet. Sie enthalten auch eine Verriegelungsposition, so dass die Encoderbaugruppe nicht unbeabsichtigt von dem Motor gelöst werden kann.

Um eine platzsparende Bauweise zu verwirklichen, wurde in die Gehäusegrundplatte eine Vertiefung für die Aufnahme der flanschseitig montierten Grundplatte geschaffen. Werkzeuge sind nur für die Befestigung der flanschseitigen Grundplatte erforderlich, alle anderen Fixierungen können durch einfache Schraub- oder Klipsverbindungen formschlüssig hergestellt werden. Mit dem Einschieben der Leiterplatte 6 in ihre Endposition ist die Montage abgeschlossen und die Encodereinheit betriebsbereit.

## Patentansprüche

1. Encoderbaugruppe, bestehend aus
einer Grundplatte (1) zur Befestigung des Encoders auf der Flanschseite eines Elektromotors, oder an eine andere, beliebige angetriebene Wellenart
einer Taktscheibe mit Code-Markierungen, die radial und axial auf einer aus dem Elektromotor flanschseitig herausragenden Motorwelle mittels Press-Sitz fixiert ist,
mindestens einem Sensor, der im Bereich der Code-Markierungen der Taktscheibe in allen drei Koordinatenrichtungen positioniert und fixiert ist,
einer Leiterplatte mit Anschlüssen für eingehende und ausgehende Leitungen sowie ggf. zum Befestigen von Anschlussbuchsen für Signalleitungen und Energieversorgung der Sensoren und einem Encodergehäuse, das an dem Elektromotor befestigt ist,
**dadurch gekennzeichnet, dass**
das Encodergehäuse (2) aus einer Gehäusegrundplatte (12) und einem parallel zur Gehäusegrundplatte angeordnetem Gehäusedeckel (10) mit Führungsnuten (11) für die Aufnahme der Leiterplatte (6), die ebenfalls parallel zur Gehäusegrundplatte (12) verläutt, und Seitenwänden besteht, wobei zumindest eine der Seitenwände abnehmbar ist und in der Gehäusegrundplatte (12) oder an den feststehenden Seitenwänden verankert werden kann,
dass die Gehäusegrundplatte (12) über eine formschlüssige Verbindung an der flanschseitigen Grundplatte (1) konzentrisch zur Motorwelle oder der beliebig angetriebenen Wellenart lösbar befestigt ist, wobei in der Gehäusegrundplatte (12) eine Aussparung zur Aufnahme der Motorwelle oder der beliebig angetriebenen Wellenart rechtwinklig zur Gehäusegrundplatte (12) eingeformt ist und über dieser Aussparung die Taktscheibe (4) mittels einer Taktscheiben-Nabe (3) zwischen den Innenselten des Encodergehäuses und der Unterseite der Leiterplatte auf der Motorwelle oder der beliebig angetriebenen Wellenart positionierbar ist,
dass die Leiterplatte (6) mit einer darauf befestigten Sensoreinheit (5) und der beweglichen Seitenwand (8) in die Führungsnuten (11) des Gehäusedeckels (10) einschiebbar ist, wobei die Leiterplatte (6) in ihrer Länge - ausgehend von der beweglichen Seitenwand (8) - bis über die Aussparung für die Motorwelle oder der beliebig angetriebenen Wellenart reicht und im Bereich oberhalb der Motorwelle oder der beliebig angetriebenen Wellenart ein Widerlager, z.B. in Form eines Ambosses (9), aufweist und
dass der Gehäusedeckel (10) umfangseitig Führungselemente (13) zur Positionierung und Fixierung an den Seitenwänden des Gehäuses (2) aufweist.

2. Vorrichtung nach Anspruch 1,
**dadurch gekennzeichnet, dass**
die formschlüssige Verbindung zwischen flanschseitiger Grundplatte (1) und Gehäusegrundplatte (12) als Bajonett-Verschluss ausgebildet ist.

3. Vorrichtung nach Anspruch 1 oder 2,
**dadurch gekennzeichnet, dass**
die bewegliche Seitenwand (8) mit einer Klips-Verbindung in der Gehäusegrundplatte (12) verankert ist.

4. Vorrichtung nach einem der vorhergehenden Ansprüche 1-3,
**dadurch gekennzeichnet, dass**
die Taktscheiben-Nabe (3) mit einem unterem Abschnitt (18) in die Aussparung der Gehäusegrundplatte eingreift.

5. Vorrichtung nach einem der vorhergehenden Ansprüche 1-4,
**dadurch gekennzeichnet, dass**
die Taktscheiben-Nabe einen mittleren Abschnitt mit einem Bund (19) aufweist, der als Auflagefläche für die Taktscheibe dient und der in seiner eingebauten Position mit der Sensor-Messebene, z.B. einem Sensorschlitz (20) flüchtet.

6. Verfahren zur Montage einer Encoderbaugruppe bestehend aus einer Grundplatte (1) zur Befestigung des Encoders auf der Flanschseite eines Elektromotors, einer Taktscheibe mit Code-Markierungen, die radial und axial auf einer aus dem Elektromotor flanschseitig herausragenden Motorwelle oder der beliebig angetriebenen Wellenart mittels Press Sitz fixiert ist, mindestens einem Sensor, der im Bereich der Code-Markierungen der Taktscheibe in allen drei Koordinatenrichtungen mit hoher Genauigkeit zu positionieren und fixieren ist,
einer Leiterplatte mit Anschlüssen für eingehende und ausgehende Leitungen sowie ggf. zum Befestigen von Anschlussbuchsen für Signalleitungen und Energieversorgung der Sensoren und einem Encodergehäuse, das an dem Elektromotor befestigt ist, umfassend die folgenden Schritte:
- Befestigung einer Grundplatte (1) auf der Flanschseite des Elektromotors
- Vormontage des Encodergehäuses, bestehend aus einer Gehäusegrundplatte (12) mit einer Aussparung im Bereich der Motorwelle oder der beliebig angetriebenen Wellenart, mehreren Seitenwänden, von denen mindestens eine beweglich in einem Gehäusedeckel (10) geführt ist
- einer Leiterplatte (6), die parallel zur Gehäusegrundplatte (12) und zusammen mit der beweglichen Seitenwand (8) im Encodergehäuse geführt ist und die von der Seitenwand (8) bis über die Aussparung in der Gehäusegrundplatte reicht
- indem eine Nabe (3) mit einer Taktscheibe (4) über die Aussparung in der Gehäusegrundplatte (12) plaziert wird
- und in die Führungsnuten (11) des Gehäusedeckels (13) eine Leiterplatte (6) mit einer darauf befestigten Sensoreinheit (5) und der beweglichen Seitenwand (8) des Encodergehäuses soweit eingeschoben wird, dass sich auf der Leiterplatte im Bereich der Aussparung oberhalb der Motorwelle oder der beliebig angetriebenen Wellenart ein Widerlager zur Erzeugung einer Pressbewegung z. b. in Form eines Ambosses bildet,
- das vormontierte Encodergehäuse auf die Grundplatte aufgesetzt und formschlüssig mit ihr verbunden wird, wobei gleichzeitig eine in Richtung der Motorwelle wirkende Pressbewegung auf die Taktscheibe und die Nabe ausgeübt wird,
- und die Leiterplatte mit der beweglichen Seitenwand vollständig in den Gehäusedeckel eingeschoben wird, so dass die Sensoreinheit (5) die Code-Markierungen der Taktscheibe erfasst und das Widerlager aus dem Kontaktbereich mit der Taktscheibe-Nabe entfernt wird und der Encoder in einen betriebsbereiten Zustand versetzt wird.

7. Verfahren nach Anspruch 6,
**dadurch gekennzeichnet, dass**
eine ringförmige Grundplatte (1) konzentrisch zur Motorwelle an der Flanschseite des Elektromotors oder der balicbig angetriebenen Wellenart befestigt wird.

8. Verfahren nach Anspruch 6 oder 7,
**dadurch gekennzeichnet, dass**
die Aussparung in der Gehäusegrundplatte (12) und die Führung (11) im Gehäusedeckel (10) zur Zentrierung der Leiterplatte (6) mit dem daran befestigten Sensor (5) In bezug auf die auf der Motorwelle oder der beliebig angetriebenen Wellenart befestigten Taktscheibe (4) dient.

9. Verfahren nach Anspruch 6-8,
**dadurch gekennzeichnet, dass**
die Leiterplatte (6) mit dem daran befestigten Sensor (5) nur soweit in die Führung (11) des Gehäusedeckels (10) eingeschoben wird, dass ein an der Spitze der Leiterplatte (6) angeordnetes Widerlager in Eingriff mit einem oberen Abschnitt der Taktscheiben-Nabe (3) gelangt.

10. Verfahren nach Anspruch 6-9,
**dadurch gekennzeichnet, dass**
das vormontierte Encodergehäuse auf die Motorwelle oder der beliebig angetriebenen Wellenart aufgesteckt wird,
durch Druck auf den Gehäusedeckel (10) die Taktscheibe (4) auf die Motorwelle oder der beliebig angetriebenen Wellenart aufgepresst wird,
durch eine Drehbewegung des Encodergehäuses (2) dieses auf der flanschseitigen Grundplatte (1) formschlüssig befestigt wird
und dann die bewegliche Gehäuse-Seitenwand (8) vollständig in das Encodergehäuse (2) eingeschoben wird, so dass die Taktscheibe (4) freigeschaltet wird.
